# EUROPÄISCHE PATENTSCHRIFT

(11) **EP 2 876 061 B1**
(45) Veröffentlichungstag und Bekanntmachung des Hinweises auf die Patenterteilung: **02.08.2017**
(21) Anmeldenummer: 14193003.2
(22) Anmeldetag: 13.11.2014
(51) Int. Cl.: B65G 15/64, B65G 39/16

(54) **Führung für ein Transportband in einer Druckmaschine**
Guide for a conveyor belt in a printing machine
Guidage pour une bande transporteuse dans une machine à imprimer

(30) Priorität: 20.11.2013 DE 102013112827
(43) Veröffentlichungstag der Anmeldung: 27.05.2015
(73) Patentinhaber: manroland web systems GmbH, 86153 Augsburg (DE)
(72) Erfinder: Albrecht, Stefan, 86356 Neusäß (DE); Bachmeir, Xaver, 86444 Affing (DE); Fischer, Stephan, 86316 Friedberg (DE); Jirous, Marek, 86456 Gablingen (DE); Rothenberger, Norbert, 86154 Augsburg (DE); Stuhlmiller, Helmut, 86450 Altenmünster (DE)

(56) Entgegenhaltungen:
- DE-B1- 2 723 033
- US-A1- 2002 130 463

## Beschreibung

Die Erfindung bezieht sich auf ein Führungselement für ein endloses Transportband zum Führen von Substraten während des Druckvorgangs einer Druckmaschine mit einer Mehrzahl von Führungsrollen, die mit dem Transportband in Kontakt bringbar sind und einer Anzahl von ersten Lastbrücken zur Aufnahme jeweils einer Mehrzahl der Führungsrollen. Des Weiteren bezieht sich die Erfindung auf ein Führungssystem für ein endloses Transportband zum Führen von Substraten während des Druckvorgangs einer Druckmaschine mit einer Anzahl von oben genannten Führungselementen.

Derartige Transportbänder sind üblicherweise als Endlosbänder ausgebildet und werden eingesetzt, um flächige Warenbahnen, insbesondere solche aus einem kritischen Material, z. B. solche mit hoher Neigung zu Verzug, sicher durch eine Maschine, beispielsweise eine Druckmaschine, zu führen. Solche Bänder werden beispielsweise in der WO 82/00975 oder der DE 10023689 offenbart. Sie bestehen meistens aus einem mehrlagigen Aufbau, bei dem eine textile Gewebelage die Spannkräfte aufnimmt und bei dem eine Deckschicht so ausgebildet ist, dass diese mit einem Adhäsiv beschichtet werden kann, das die Verbindung zwischen Band und Substrat herstellt. Heutige Endlosbänder bestehen meist aus einem Polyurethan, das sich für diese Zwecke besonders gut eignet. Es ist zudem schmelzbar, was das Verschweißen der beiden Enden des Bandes in der Maschine zu einem endlosen Band ermöglicht. Dazu werden beide Enden meist mit einem zackenförmigen Abschluss versehen, die unter dem Einfluss hoher Temperatur und hohen Drucks miteinander verschweißt werden.

Es ist bekannt, dass solche Bänder aufgrund von Fertigungstoleranzen, Schwankungen der Materialparameter sowie der Unstetigkeit im Bereich der Schweißnaht zu einem Zick-Zack-Lauf oder einem Abdriften tendieren. Bei einem Einsatz des Endlosbandes in einer Druckmaschine für den Transport eines Bedruckstoffes ergeben sich dabei beim Nacheinanderdruck mit mehreren Farben seitliche Registerversätze, die die Qualität des Druckproduktes erheblich einschränken. Um dieses Problem zu umgehen, sind verschiedene Lösungsansätze entwickelt worden.

Die AT 209250 offenbart beispielsweise eine Federspirale, die im Transportband befestigt ist und in entsprechenden Führungsschienen verläuft. In der EP 402725 werden anstelle der Federspiralen Rollen verwendet, die in außen angebrachten Führungsschienen laufen. Die Idee, Rollen auf einer Seite an die Bandkante anzustellen, wurde für Bänder aus gewundenem Draht bereits in der US 1,821, 664 aufgezeigt. Alternativ wird hier eine Führungsschiene vorgeschlagen, an die sich die Bandkante abstützen kann. Ferner wurden in der DE 4034427 verschiedene Formen an Nuten im Band vorgeschlagen, die in entsprechenden Profilschienen laufen. Allen diesen Lösungen ist gemein, dass entweder die erforderliche Führungsgenauigkeit nicht erreicht wird oder dass die Lebensdauer des Bandes aufgrund erhöhter Reibung und erhöhtem Verschleiß stark begrenzt wird.

Um diese Nachteile zu beheben, wurden auch Positionsregler entwickelt, die meistens über die Winkelverstellung mindestens einer Führungswalze arbeiten. Solche Bandregelsysteme werden z.B. in der DD 237643 oder in der WO 98/22373 offenbart. Diesen Regelsystemen ist gemein, dass sie sehr träge arbeiten, dass ihre Realisierung sehr aufwändig ist und dass sie nur auf den Einlauf der Druckstrecke wirken. Je weiter sich das Band von der geregelten Walze entfernt, desto geringer wird der Einfluss des Regeleingriffs. Daher sind mit dieser Methode die erforderlichen Genauigkeiten bei längeren Endlosbändern, beispielsweise für den Einsatz bei längeren Druckstrecken, ebenfalls nicht zu erreichen.

Aus der US 2002/0130463 A1 ist beispielsweise ein Führungssystem für Plattenmaterialien bekannt, während die DE 27 23 033 B1 einen Kurvengurtförderer gemäß dem Oberbegriff des Anspruchs 1 offenbart. Der Erfindung liegt daher die Aufgabe zugrunde, Führungselemente und ein Führungssystem für ein endloses Transportband zum Führen von Substraten während des Druckvorgangs in einer Druckmaschine anzugeben, die den Mangel des seitlichen Zick-Zack-Verlaufs oder des Abdriftens des Transportbandes auf möglichst einfache Art und Weise behebt.

Bezüglich der Führungselemente wird diese Aufgabe erfindungsgemäß gelöst, indem eine Anzahl von zweiten Lastbrücken vorgesehen sind, in denen jeweils eine Anzahl der ersten Lastbrücken und/oder eine Anzahl weiterer zweiter Lastbrücken schwenkbar gelagert sind, wobei die ersten Lastbrücken (6) und die weiteren zweiten Lastbrücken (8) um eine Achse senkrecht zur Transportbandebene (12) schwenkbar sind.

Die Erfindung geht dabei von der Überlegung aus, dass eine besonders ruhige und dem Zick-Zack-Verlauf angepasste Führung des Transportbandes dann erfolgen kann, wenn die Führungsrollen optimal, d.h. mit gleichmäßigen Anstellkräften an das Transportband angelegt werden können. Dies kann dann erreicht werden, wenn die Führungsrollen bzw. die ersten Lastbrücken zumindest teilweise schwenkbar gelagert sind und somit im richtigen Winkel an das Transportband angestellt werden können. Daher sind zweite Lastbrücken vorgesehen, in denen diese ersten Lastbrücken oder weitere zweite Lastbrücken schwenkbar gelagert sind. Dabei sind die Lastbrückenum eine Achse senkrecht zur Transportbandebene schwenkbar, damit sich die Führungsrollen optimal an den Rand des Transportbandes anlegen können.

Um ein Einzwängen des endlosen Transportbandes und die damit verbundene Reduktion der Lebensdauer zu vermeiden, sind mindestens eine Führungsrolle, eine erste Lastbrücke und/oder eine zweite Lastbrücke in vorteilhafter Ausführung quer zur Transportbandlaufrichtung federnd gelagert. Dadurch wird eine besonders sanfte Führung des Transportbandes erreicht, die einen Zick-Zack-Verlauf zusätzlich unterdrückt. Dabei kann die Federstärke der Federung an die Bedürfnisse, beispielsweise in Abhängigkeit des Material des Transportbandes, der Geschwindigkeit des Transportbandes oder weiterer Systemparameter, in besonders vorteilhafter Ausführung gezielt eingestellt und auch verändert werden. Somit kann eine optimale Transportbandführung erreicht werden.

Für eine möglichst symmetrische und somit auch gleichmäßige Führung der Transportbahn umfasst in bevorzugter Ausführung jede erste Lastbrücke eine gerade Anzahl von Führungsrollen. Dabei hat sich die Verwendung von zwei Führungsrollen in einer ersten Lastbrücke als besonders bevorzugt herausgestellt. Wie auch bei der Anzahl von Führungsrollen in den ersten Lastbrücken ist es besonders vorteilhaft, wenn die Anzahl der ersten Lastbrücken gerade ist und jede zweite Lastbrücke zwei erste oder zweite Lastbrücken aufnehmen kann. Dadurch wird eine pyramidenähnliche Struktur der Lastbrücken ermöglicht, die den Zick-Zack-Verlauf des Transportbandes besonders gut aufnehmen und gegebenenfalls abfedern können. Dadurch ergibt sich eine besonders bevorzugte Anzahl von zweiten Lastbrücken von n-1, wobei n gerade und die Anzahl der ersten Lastbrücken ist.

Damit die Führungsrollen die Transportbahn auch bei hohen Geschwindigkeiten sicher führen können, umfasst in vorteilhafter Ausführung die Führungsrolle eine Umfangsnut, in der die Transportbahn geführt wird. Neben der Umfangsnut sind aber auch andere Profile der Führungsrolle möglich, so ist insbesondere auch eine konvexe Querschnittsform der Führungsrolle vorteilhaft.

Bezüglich des Führungssystems wird die obige Aufgabe erfindungsgemäß gelöst, indem die Führungselemente mit mindestens je einer Führungsrolle auf beiden Seiten des Transportbandes angeordnet sind. Zur Vermeidung des Zick-Zack-Verlaufes ist es dabei besonders vorteilhaft, wenn das Führungssystem zumindest ein Paar der erfindungsgemäßen Führungselemente aufweist, die im Wesentlichen gegenüberliegend voneinander angeordnet sind. Durch Einwirkung der Führungsrollen auf beiden Seiten des Transportbandes wird dieses im Bereich der Führungsrollen besonders einfach quer zur Bahnlaufrichtung ausgerichtet und in der gewünschten Position gehalten.

Eine weitere bevorzugte Ausführung besteht aus einer einzelnen ersten Lastbrücke, in der eine oder mehrere Führungsrollen vorgesehen sind und die ohne die Verwendung einer zweiten Lastbrücke direkt schwenkbar um eine Achse senkrecht zur Transportbandebene oder schwenkbar und federnd gelagert ist.

Wie auch bei den einzelnen Lastbrücken oder Führungsrollen ist es von besonderem Vorteil, wenn mindestens eines der paarweise angeordneten Führungselemente quer zur Transportrichtung federnd gelagert ist. Dabei hat sich als besonders vorteilhaft erwiesen, wenn die starr gelagerten Führungselemente auf einer Seite des Transportbandes und die federnd gelagerten Führungselemente auf der anderen Seite des Bandes angeordnet sind. Es ist aber ebenso möglich, federnde und starre Führungselemente alternierend oder unregelmäßig abwechselnd anzuordnen.

Besonders gute Ergebnisse können erzielt werden, wenn zumindest ein Teil der Führungselemente im Leertrum des Transportbandes angeordnet sind und/oder vor jeder Druckeinheit. Es hat sich für den Bandlauf besonders vorteilhaft herausgestellt, wenn ein Paar von Führungselementen im Leertrum vor der vorderen Umlenkwalze angeordnet wird. Dadurch kann erreicht werden, dass das Band bereits sehr ruhig in den Lastbereich einläuft. Bei einer Anordnung von Führungselemente vor jeder Druckeinheit kann erreicht werden, dass das Transportband zumindest im Druckbereich optimal ausgerichtet ist und somit die Substrate ohne Versatz gedruckt werden können. Dies ermöglicht eine besonders hohe Druckqualität.

Die mit der Erfindung erzielten Vorteile liegen insbesondere darin, dass beim Nacheinanderdruck mit mehreren Druckstellen eine höhere Farbregistergenauigkeit erreicht werden kann, ohne dass die Lebensdauer des Transportbandes negativ beeinflusst wird. Auch kann dadurch der hohe Aufwand einer aktiven Regelung bewusst umgangen werden. Durch die Erfindung ist es zudem möglich, Druckverfahren mit einer Druckdeckenlösung zu kombinieren, bei denen höhere Verfahrenskräfte entstehen. Transportbänder in Druckmaschinen sind hinlänglich mit Siebdruck- und Digitaldruckmaschinen bekannt, bei denen nur eine geringe Einwirkung auf das Endlosband erfolgt. Mit der erfindungsgemäßen Führung können nun beispielsweise auch das Offsetdruckverfahren, der Tiefdruck oder der Flexodruck auf einem Transportband angewandt werden.

Ein Ausführungsbeispiel der Erfindung wird anhand einer Zeichnung näher erläutert. Darin zeigen:
Fig. 1 ein Führungselement mit zwei ersten Lastbrücken,
Fig. 2 ein federnd gelagertes Führungselement,
Fig. 3 ein federnd gelagertes Führungselement mit vier ersten Lastbrücken,
Fig. 4 ein Führungselement mit einer ersten Lastbrücke,
Fig. 5 ein endloses Transportband mit einem Führungssystem,
Fig. 6 verschiedene Querschnittsprofile einzelner Führungsrollen.

Gleiche Teile sind in allen Figuren mit denselben Bezugszeichen versehen.

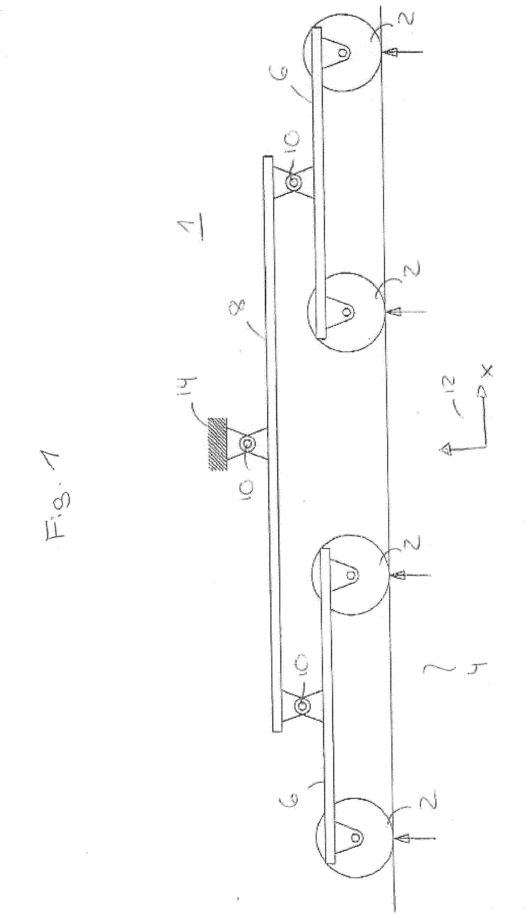

Ein Ausführungsbeispiel eines Führungselements 1 ist in der Fig. 1 dargestellt. Das Führungselement 1 umfasst dabei beispielhaft vier Führungsrollen 2, die mit dem Transportband 4 in Kontakt bringbar sind. Jeweils zwei dieser Führungsrollen 2 sind in einer ersten Lastbrücke 6 angeordnet. Je nach Ausführungsform des Führungselements können diese Führungsrollen 2 quer zur Laufrichtung x des Transportbandes 4 federnd gelagert sein, sodass sie einen Zick-Zack-Verlauf, also eine Verschiebung des Transportbandes 4 quer zur Laufrichtung x abfedern und ausgleichen können.

Die beiden ersten Lastbrücken 4 des Führungselements 1 sind wiederum in einer zweiten Lastbrücke 8 um eine Achse 10 senkrecht zur Transportbandebene 12 schwenkbar gelagert. Somit können die ersten Lastbrücken 6 durch eine Schwenkbewegung relativ zur zweiten Lastbrücke 8 Unebenheiten des Randes des Transportbandes 4 aber auch die Zick-Zack-Bewegungen des Transportbandes 4 besonders gut ausgleichen. Die zweite Lastbrücke 8 ist dabei um eine Achse 10 senkrecht zur Transportbandebene 12 schwenkbar an einem Träger 14 der Druckmaschine oder einem anderen ortsfesten Element der Druckmaschine befestigt.

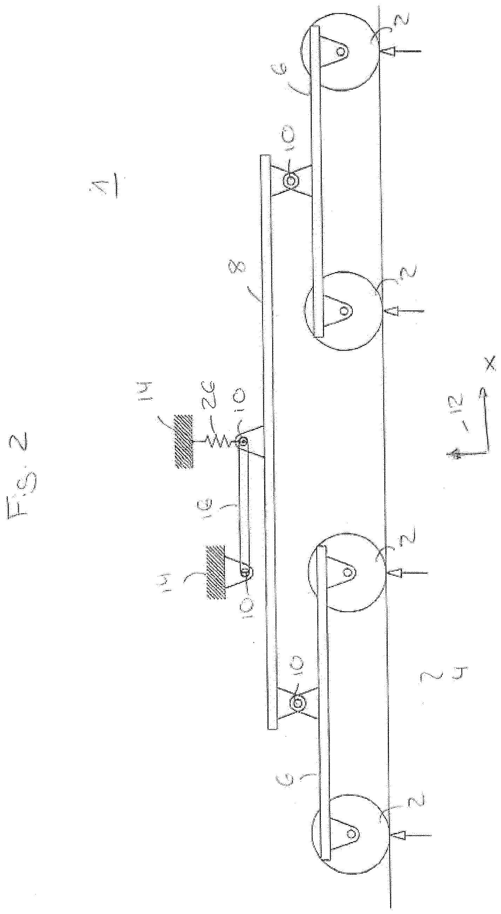

Eine alternative Befestigungsmöglichkeit des Führungselementes 1 nach Fig. 1 an den Trägern 14 der Druckmaschine ist in der Fig. 2 dargestellt. Hier ist die zweite Lastbrücke 8 um eine Achse 10 senkrecht zur Transportbandebene 12 schwenkbar an einem Hebelelement 16 befestigt, der das Führungselement 1 an einem Träger 14 der Druckmaschine oder einem anderen ortsfesten Element der Druckmaschine befestigt. Dieses Hebelelement 16 ist dabei wiederum um eine Achse 10 senkrecht zur Transportbandebene 12 schwenkbar an dem Träger 14 angeordnet. Zusätzlich ist allerdings die zweite Lastbrücke quer zur Laufrichtung x des Transportbandes mittels eines Federelements 26 federnd an dem oder einem weiteren Träger 14 gelagert, sodass auch das ganze Führungselement 1 die seitliche Bewegung des Transportbandes 4 ausgleichen und über die Federkraft dieser entgegenwirken kann.

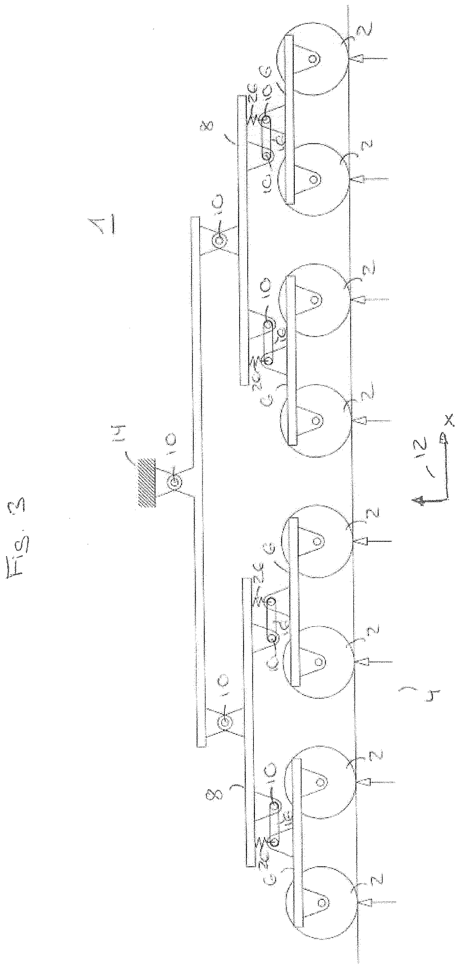

In Fig. 3 ist ein Ausführungsbeispiel eines Federelements 1 mit acht Führungsrollen 2 dargestellt. Dabei sind wieder jeweils zwei Führungsrollen 2 in einer ersten Lastbrücke 6 angeordnet und jeweils zwei erste Lastbrücken um eine Achse 10 senkrecht zur Transportbandebene 12 schwenkbar in einer zweiten Lastbrücke 8. Im Unterschied zum Ausführungsbeispiel nach Fig. 1 oder Fig. 2 sind nun diese beiden zweiten Lastbrücken 8 in einer dritten zweiten Lastbrücke 8 um eine Achse 10 senkrecht zur Transportbandebene 12 schwenkbar angeordnet, wodurch eine Pyramidenstruktur der Lastbrücken 6, 8 entsteht. Auch diese dritte zweite Lastbrücke 8 kann dann wieder direkt an einem Träger 14 der Druckmaschine befestigt werden oder aber - wie in der Fig. 3 - dargestellt, wieder über ein Hebelelement 16 und einem Federelement 26 federnd gelagert sein.

Neben der möglichen federnd gelagerten Aufhängung an einem Träger 14 der Druckmaschine, sind im Ausführungsbeispiel aber auch die ersten Lastbrücken 6 über Federelemente 26 federnd an den zweiten Lastbrücken gelagert. Es ergibt sich von selbst, dass je nach Anwendung alle oder auch nur ein Teil der Lastbrücken 6, 8 federnd gelagert sein können. Hierdurch kann eine an die individuellen Gegebenheiten angepasste Federung des Führungselements erzielt werden.

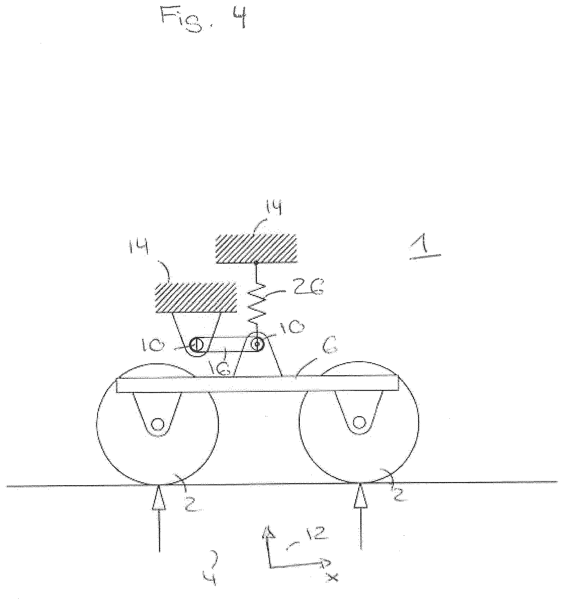

Im Ausführungsbeispiel nach Fig. 4 ist ein Führungselement 1 mit nur zwei Führungsrollen 2 dargestellt, die an einer einzelnen ersten Lastbrücke 6 angeordnet sind. Diese erste Lastbrücke 6 ist im Gegensatz zu den obigen Ausführungsbeispielen nicht an einer zweiten Lastbrücke schwenkbar gelagert, sondern direkt an einem Träger 14 schwenkbar um eine Achse 10 senkrecht zur Transportbandebene 12 angeordnet. Wie auch im Ausführungsbeispiel nach der Fig. 2, ist die erste Lastbrücke 6 federnd an einem Träger 14 gelagert, sodass die Kräfte aufgrund einer seitlichen Verschiebung des Transportbandes 4 besonders gut aufgefangen werden können. Eine Anzahl derartiger Führungselemente 1 wird insbesondere in einem Führungssystem verwendet.

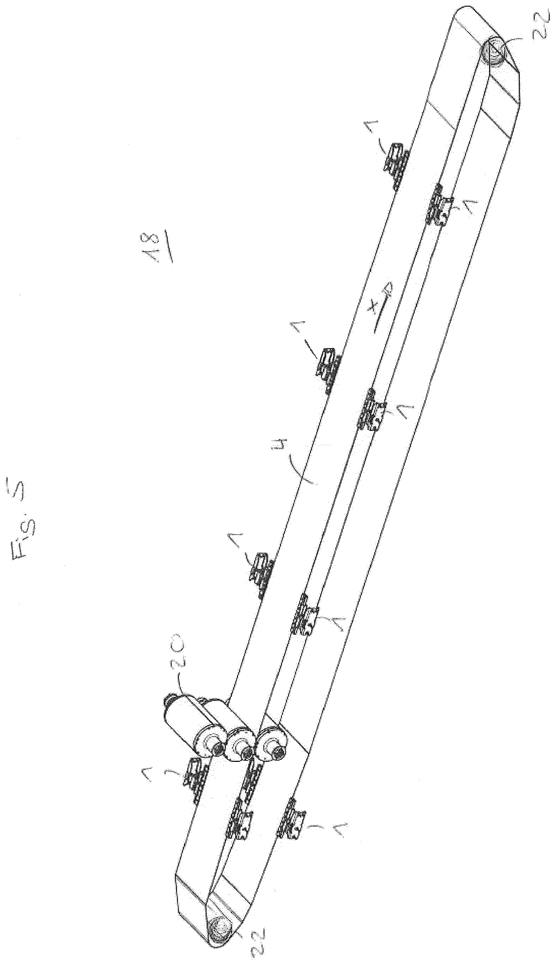

Ein solches Führungssystem 18 ist in einem Ausführungsbeispiel in Fig. 5 beispielhaft dargestellt. Dieses Führungssystem umfasst eine Anzahl von Führungselementen 1. Diese Führungselemente können dabei den aus den Fig. 1 - 4 entsprechen, können aber auch im Wesentlichen nur aus einer einzelnen Führungsrolle 2 bestehen, die an das Transportband 4 angelegt werden. Die Führungselemente 1 des Führungssystems nach Fig. 5 sind somit nicht auf die obigen Ausführungsbeispiele beschränkt. Die Führungselemente 1 nach Fig. 5 sind dabei gezielt gegenüber voneinander angeordnet, um beidseitig eine sichere und genaue Bahnführung zu ermöglichen. Dabei ist ein Führungselementepaar direkt vor der Druckeinheit 20 angeordnet, um eine Verschiebung des Transportbandes 4 quer zur Laufrichtung x unmittelbar vor der Druckeinheit 20 und somit auch während des Druckvorganges zu verhindern. Somit kann eine besonders hohe Qualität des Druckproduktes erreicht werden. Zusätzlich ist ein Führungselementepaar im Leertrum des Transportbandes 4, direkt vor der vorderen Umlenkwalze 22 angeordnet. Dies gewährleistet einen ruhigen Einlauf des Transportbandes in den Lastbereich.

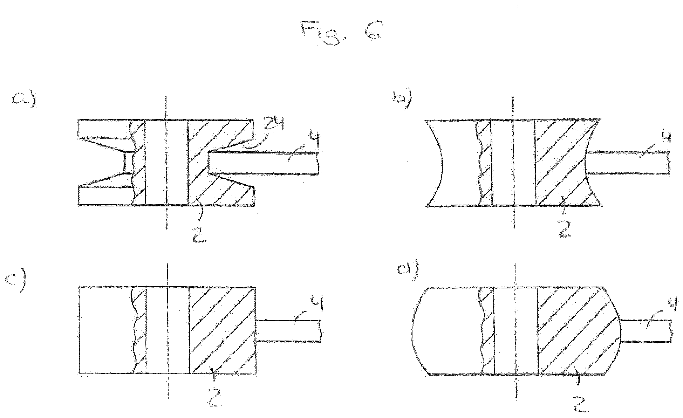

Verschiedene bevorzugte Profile der Führungsrollen 2 sind in Fig. 6 im Querschnitt dargestellt. Bei der Verwendung einer Umfangsnut (24) (Fig. 6 a) oder einer konkaven Ausbildung der Oberfläche (Fig. 6 b) kann das Transportband von der Oberfläche der Führungsrollen teilweise umschlossen bzw. umgriffen werden, sodass das Transportband 4 sicher in der Führungsrolle 2 liegt und nicht herausspringen kann. Aber auch eine planare (Fig. 6 c) oder gar eine konvexe Oberfläche (Fig. 6 d) ist möglich, da diese den Randbereich des Transportbandes weniger stark beanspruchen.

### Bezugszeichenliste

- 1: Führungselement
- 2: Führungsrolle
- 4: Transportband
- 6: erste Lastbrücke
- 8: zweite Lastbrücke
- 10: Schwenkachse
- 12: Transportbandebene
- 14: Träger
- 16: Hebelelement
- 18: Führungssystem
- 20: Druckeinheit
- 22: Umlenkwalze
- 24: Umfangsnut
- 26: Federelement

- x: Laufrichtung des Transportbandes

## Patentansprüche

1. Führungselement (1) für ein endloses Transportband (4) zum Führen von Substraten während des Druckvorgangs einer Druckmaschine mit einer Mehrzahl von Führungsrollen (2), die mit dem Transportband (4) in Kontakt bringbar sind und einer Anzahl von ersten Lastbrücken (6) zur Aufnahme jeweils einer Mehrzahl der Führungsrollen (2),
wobei
eine Anzahl von zweiten Lastbrücken (8) vorgesehen sind, in denen jeweils eine Anzahl der ersten Lastbrücken (6) und/oder eine Anzahl weiterer zweiter Lastbrücken (8) schwenkbar gelagert sind
**dadurch gekennzeichnet, dass** die ersten Lastbrücken (6) und die weiteren zweiten Lastbrücken (8) um eine Achse senkrecht zur Transportbandebene (12) schwenkbar sind.

2. Führungselement (1) nach Anspruch 1, **dadurch gekennzeichnet, dass** alle oder eine Unteranzahl der Führungsrollen (2) quer zur Transportbandlaufrichtung (x) federnd in den ersten Lastbrücken (6) gelagert sind.

3. Führungselement (1) nach einem der Ansprüche 1 bis 2, **dadurch gekennzeichnet, dass** alle oder eine Unteranzahl der ersten Lastbrücken (6) quer zur Transportbandlaufrichtung (x) federnd in den zweiten Lastbrücken (8) gelagert sind.

4. Führungselement (1) nach einem der Ansprüche 1 bis 3, **dadurch gekennzeichnet, dass**, sofern zweite Lastbrücken (8) in weiteren zweiten Lastbrücken (8) gelagert sind, alle oder eine Unteranzahl von diesen in den zweiten Lastbrücken (8) gelagerten zweiten Lastbrücken (8) quer zur Transportbandlaufrichtung (x) federnd gelagert sind.

5. Führungselement (1) nach einem der Ansprüche 1 bis 4, **dadurch gekennzeichnet, dass** die Federstärke der federnd gelagerten Führungsrollen (2) oder Lastbrücken (6, 8) veränderbar ausgeführt ist.

6. Führungselement (1) nach einem der Ansprüche 1 bis 5, **dadurch gekennzeichnet, dass** jede erste Lastbrücke (6) eine gerade Anzahl von Führungsrollen (2) umfasst.

7. Führungselement (1) nach einem der Ansprüche 1 bis 6, **dadurch gekennzeichnet, dass** die Anzahl der ersten Lastbrücken (6) gerade ist.

8. Führungselement (1) nach Anspruch 7, **dadurch gekennzeichnet, dass** die Anzahl der zweiten Lastbrücken (8) n-1 ist, wobei n die Anzahl der ersten Lastbrücken (6) ist.

9. Führungselement (1) nach einem der Ansprüche 1 bis 8, **dadurch gekennzeichnet, dass** die Führungsrollen (2) zur Führung der Transportbahn (4) eine Umfangsnut (24) umfassen.

10. Führungssystem (18) für ein endloses Transportband (4) zum Führen von Substraten während des Druckvorgangs einer Druckmaschine mit einer Anzahl von Führungselementen (1) nach einem der Ansprüche 1 bis 9, , **dadurch gekennzeichnet, dass** die Führungselemente (1) auf beiden Seiten des Transportbandes (4) angeordnet sind.

11. Führungssystem (18) Anspruch 10, **dadurch gekennzeichnet, dass** mindestens zwei Führungselemente (1) im Wesentlichen gegenüberliegend voneinander angeordnet sind.

12. Führungssystem (18) nach einem der Ansprüche 10 bis 11, **dadurch gekennzeichnet, dass** eine Anzahl der Führungselemente (1) quer zur Transportbandlaufrichtung (12) federnd gelagert sind.

13. Führungssystem (18) nach Anspruch 12, **dadurch gekennzeichnet, dass** die starr gelagerten Führungselemente (1) und die federnd gelagerten Führungselemente (1) zumindest auf einer Seite des Transportbandes (4) alternierend oder unregelmäßig abwechselnd angeordnet sind.

14. Führungssystem (18) nach Anspruch 12, **dadurch gekennzeichnet, dass** die Führungselemente (1) auf der ersten Seite des Transportbandes (4) starr gelagert und auf der zweiten Seite des Bandes federnd gelagert sind.

15. Führungssystem (18) nach einem der Ansprüche 12 bis 14, **dadurch gekennzeichnet, dass** die Federstärke der federnd gelagerten Führungselemente (1) veränderbar ausgeführt ist.

16. Führungssystem (18) nach einem der Ansprüche 10 bis 15, **dadurch gekennzeichnet, dass** zumindest ein Teil der Führungselemente (1) im Leertrum vor der Umlenkwalze (22) angeordnet ist.

17. Führungssystem (18) nach einem der Ansprüche 10 bis 15, **dadurch gekennzeichnet, dass** zumindest ein Teil der Führungselemente (1) vor jeder Druckeinheit (20) angeordnet ist.

## Claims

1. A guide element (1) for a continuous conveyor belt (4) for guiding substrates during the printing process of a printing press comprising a plurality of guide rollers (2), which can be brought into contact with the conveyor belt (4) and a number of first load bridges (6) for accommodating a plurality of the guide rollers (2) in each case,
wherein
a number of second load bridges (8) is provided, in which a number of the first load bridges (6) and/or a number of further second load bridges (8) is in each case pivotably supported
**characterized in that** the first load bridges (6) and the further second load bridges (8) can be pivoted about an axis perpendicular to the conveyor belt plane (12).

2. The guide element (1) according to claim 1, **characterized in that** all or a smaller number of the guide rollers (2) are resiliently supported in the first load bridges (6) at right angles to the conveyor belt running direction (x).

3. The guide element (1) according to one of claims 1 to 2, **characterized in that** all or a smaller number of the first load bridges (6) are resiliently supported in the second load bridges (8) at right angles to the conveyor belt running direction (x).

4. The guide element (1) according to one of claims 1 to 3, **characterized in that**, provided that second load bridges (8) are supported in further second load bridges (8), all or a smaller number of these second load bridges (8), which are supported in the second load bridges (8), are resiliently supported at right angles to the conveyor belt running direction (x)

5. The guide element (1) according to one of claims 1 to 4, **characterized in that** the spring strength of the resiliently supported guide rollers (2) or load bridges (6, 8) is designed to be variable.

6. The guide element (1) according to one of claims 1 to 5, **characterized in that** each first load bridge (6) has an even number of guide rollers (2).

7. The guide element (1) according to one of claims 1 to 6, **characterized in that** the number of the first load bridges (6) is even.

8. The guide element (1) according to claim 7, **characterized in that** the number of the second load bridges (8) is n-1, wherein n is the number of the first load bridges (6).

9. The guide element (1) according to one of claims 1 to 8, **characterized in that** the guide rollers (2) comprise a circumferential groove (24) for guiding the conveying path (4).

10. A guide system (18) for a continuous conveyor belt (4) for guiding substrates during the printing process of a printing press comprising a number of guide elements (1) according to one of claims 1 to 9, **characterized in that** the guide elements (1) are arranged on both sides of the conveyor belt (4) .

11. The guide system (18) according to claim 10, **characterized in that** at least two guide elements (1) are arranged so as to be located substantially opposite one another.

12. The guide system (18) according to one of claims 10 to 11, **characterized in that** a number of the guide elements (1) is resiliently supported at right angles to the conveyor belt running direction (12).

13. The guide system (18) according to claim 12, **characterized in that** the rigidly supported guide elements (1) and the resiliently supported guide elements (1) are arranged so as to alternate or so as to alternate irregularly on one side of the conveyor belt (4).

14. The guide system (18) according to claim 12, **characterized in that** the guide elements (1) are rigidly supported on the first side of the conveyor belt (4) and are resiliently supported on the second side of the belt.

15. The guide system (18) according to one of claims 12 to 14, **characterized in that** the spring strength of the resiliently supported guide elements (1) is designed so as to be variable.

16. The guide system (18) according to one of claims 10 to 15, **characterized in that** at least a portion of the guide elements (1) is arranged in the empty run upstream of the deflection roller (22).

17. The guide system (18) according to one of claims 10 to 15, **characterized in that** at least a portion of the guide elements (1) is arranged upstream of each printing unit (20).

## Revendications

1. Élément de guidage (1) pour bande transporteuse sans fin (4) pour le guidage de substrats pendant le processus d'impression d'une machine d'impression, comportant une pluralité de rouleaux de guidage (2) qui peuvent être amenés en contact avec la bande transporteuse (4) et un certain nombre de premiers ponts de charge (6) destinés respectivement à recevoir une pluralité de rouleaux de guidage (2),
dans lequel
sont prévus un certain nombre de seconds ponts de charge (8) dans lesquels s'appuient respectivement de manière pivotable un certain nombre des premiers ponts de charge (6) et/ou un certain nombre de seconds autres ponts de charge (8), **caractérisé en ce que** les premiers ponts de charge (6) et/ou les seconds autres ponts de charge (8) peuvent pivoter autour d'un axe perpendiculairement au plan de la bande transporteuse (12).

2. Élément de guidage (1) selon la revendication 1, **caractérisé en ce que** la totalité ou un sous-nombre de rouleaux de guidage (2) s'appuient élastiquement (x) dans les premiers ponts de charge (6) transversalement au sens de circulation de la bande transporteuse (x).

3. Élément de guidage (1) selon une des revendications 1 à 2, **caractérisé en ce que** la totalité ou un sous-nombre des premiers ponts de charge (6) s'appuient élastiquement dans les seconds ponts de charge (8) transversalement au sens de circulation de la bande transporteuse (x).

4. Élément de guidage (1) selon une des revendications 1 à 3, **caractérisé en ce que**, dans la mesure où de seconds ponts de charge (8) s'appuient dans de seconds autres ponts de charge (8), la totalité ou un sous-nombre de ceux-ci s'appuient élastiquement dans les seconds ponts de charge (8) s'appuyant dans les seconds ponts de charge (8) transversalement au sens de circulation de la bande transporteuse (x).

5. Élément de guidage (1) selon une des revendications 1 à 4, **caractérisé en ce que** la force de ressort des rouleaux de guidage (2) ou des ponts de charge (6, 8) s'appuyant élastiquement est établie de manière à être modifiable.

6. Élément de guidage (1) selon une des revendications 1 à 5, **caractérisé en ce que** chaque premier pont de charge (6) comprend un nombre pair de rouleaux de guidage (2).

7. Élément de guidage (1) selon une des revendications 1 à 6, **caractérisé en ce que** le nombre de premiers ponts de charge (6) est pair.

8. Élément de guidage (1) selon la revendication 7, **caractérisé en ce que** le nombre de seconds ponts de charge (8) est n-1, n étant le nombre de premiers ponts de charge (6).

9. Élément de guidage (1) selon une des revendications 1 à 8, **caractérisé en ce que** les rouleaux de guidage (2) servant à guider la bande transporteuse (4) comportent une rainure circonférentielle (24).

10. Système de guidage (18) pour bande transporteuse sans fin (4) pour le guidage de substrats pendant le processus d'impression d'une machine d'impression comportant un certain nombre d'éléments de guidage (1) selon une des revendications 1 à 9, **caractérisé en ce que** les éléments de guidage (1) sont disposés sur les deux côtés de la bande transporteuse (4).

11. Système de guidage (18) selon la revendication 10, **caractérisé en ce qu'**au moins deux éléments de guidage (1) sont disposés sensiblement à l'opposé l'un de l'autre.

12. Système de guidage (18) selon une des revendications 10 à 11, **caractérisé en ce qu'**un certain nombre d'éléments de guidage (1) s'appuient élastiquement transversalement au sens de circulation de la bande transporteuse (12).

13. Système de guidage (18) selon la revendication 12, **caractérisé en ce que** les éléments de guidage s'appuyant de manière rigide (1) et les éléments de guidage s'appuyant élastiquement (1) sont disposés au moins sur un côté de la bande transporteuse (4) en alternance ou en variation irrégulière.

14. Système de guidage (18) selon la revendication 12, **caractérisé en ce que** les éléments de guidage (1) s'appuient de manière rigide sur le premier côté de la bande transporteuse (4) et élastiquement sur le second côté de la bande.

15. Système de guidage (18) selon une des revendications 12 à 14, **caractérisé en ce que** la force de ressort des éléments de guidage s'appuyant élastiquement (1) est établie de manière à être modifiable.

16. Système de guidage (18) selon une des revendications 10 à 15, **caractérisé en ce qu'**au moins une partie des éléments de guidage (1) sont disposés dans le brin vide en amont du cylindre d'inversion (22).

17. Système de guidage (18) selon une des revendications 10 à 15, **caractérisé en ce qu'**au moins une partie des éléments de guidage (1) sont disposés en amont de chaque unité d'impression (20) .
